# FASCICULE DE BREVET EUROPEEN

(11) **EP 2 185 446 B1**
(45) Date de publication et mention de la délivrance du brevet: **11.01.2012**
(21) Numéro de dépôt: 07826980.0
(22) Date de dépôt: 06.11.2007
(51) Int. Cl.: B65D 85/804, A47J 31/36

(54) **CAPSULE POUR LA PREPARATION D'UNE BOISSON**
KAPSEL ZUR ZUBEREITUNG EINES GETRÄNKS
CARTRIDGE FOR PREPARING A BEVERAGE

(30) Priorité: 03.09.2007 WO PCT/IB2007/053542
(43) Date de publication de la demande: 19.05.2010
(73) Titulaire: PSR Profitable Strategic Redeployment Sarl, 1700 Fribourg (CH)
(72) Inventeur: MARILLER, Alain, 1801 Le Mont-Pèlerin (CH)
(74) Mandataire: Grosfillier, Philippe
(86) Numéro de dépôt international: PCT/IB2007/054490
(87) Numéro de publication internationale: WO 2009/050540

(56) Documents cités:
- EP-A- 1 364 605
- EP-A- 1 440 909
- WO-A-2006/043096
- FR-A- 2 842 090
- JP-A- 2001 026 668

## Description

### Domaine de l'invention

La présente invention se situe dans le domaine de la préparation de boissons, p.ex. à base de café, par extraction d'une dose concentrée, p.ex. de café moulu, contenue dans une capsule. Elle se rapporte plus particulièrement aux doses utilisées à cet effet ainsi qu'aux dispositifs utilisant de telles doses.

### Etat de la technique

Des capsules et des machines fonctionnant selon le principe précité existent depuis de nombreuses décennies.

Les brevets US 2 899 886, US 2 968 560, US 3 403 617 et US 3 607 297 décrivent des dispositifs où la capsule est initialement perforée en plusieurs endroits, puis traversée par de l'eau sous pression.

La capsule décrite dans le brevet CH 605 293 ou dans le brevet EP 0 242 556 B1 comporte une membrane dans sa partie inférieure. De l'eau sous pression est initialement introduite dans la partie supérieure de la capsule, ce qui entraîne un gonflement de la capsule, principalement au niveau de la membrane. A partir d'une certaine pression, la membrane se déchire, autorisant de la sorte l'écoulement d'un mélange eau-café.

D'autres capsules munies d'une membrane sont décrites dans les documents brevets suivants : EP 0 468 079 A, EP 0 806 373 A, EP 0 554 469 A, EP 1 364 605 et FR 2 872 090.

### Exposé général de l'invention

Un des objectifs de la présente invention réside dans une amélioration du mélange eau-café qui se produit à l'intérieur de la capsule.

Cet objectif est atteint en dotant la paroi latérale et/ou la face supérieure de la capsule de plusieurs reliefs qui comportent chacun une zone de perforation destinée à être perforée par une lame circulaire.

Les reliefs sont disposés et conçus de manière à être perforés, de préférence simultanément, par une lame circulaire.

Dans la présente invention les reliefs peuvent être formés par gaufrage, étampage, thermoformage ou tout autre méthode adaptée au but recherché.

Les reliefs se caractérisent en ce qu'il forment une surface relativement faible, dans tous les cas bien inférieure à la surface totale de la face latérale et/ou de face supérieure de la capsule. Par ailleurs, l'épaisseur de la paroi au niveau des reliefs est sensiblement identique à l'épaisseur des parois de la capsule. Il en résulte que la force de l'élément perforant par unité de surface est particulièrement élevée au niveau des reliefs. Ainsi, lorsque l'élément perforant est actionné, c'est au niveau des reliefs que la capsule est percée.

On notera enfin qu'en l'absence de tels reliefs, la capsule ne pourrait être percée.

### Exposé détaillé de l'invention

L'invention est décrite plus en détail ci-après au moyen d'exemples illustrés par les figures suivantes :
La figure 1 une premier exemple de capsule selon l'invention
La figure 2 un deuxième exemple de capsule selon l'invention
La figure 3 un troisième exemple de capsule selon l'invention
La figure 4 un quatrième exemple de capsule selon l'invention
La figure 5 illustre schématiquement un exemple de dispositif utilisant une capsule selon l'invention
La figure 6 montre un exemple de perforation d'une capsule selon l'invention
La figure 7 montre un gaufrage selon l'invention, après avoir subi une perforation.
Les figures 8 et 9 présentent un exemple de rallongement de cage à capsule.
Les figures 10 et 11 présentent un autre exemple de rallongement de cage à capsule.

### Liste des références numériques utilisées dans les figures :

1. Corps creux
2. Paroi latérale
3. Face supérieure
4. Face inférieure
5. Relief type 1
6. Relief type II
7. Relief type III
8. Relief type IV
9. Lame tranchante
10. Relief de lame
11. Perforation
12. Logement de capsule
13. Bloc de retenue
14. Orifice
15. Entrée d'eau

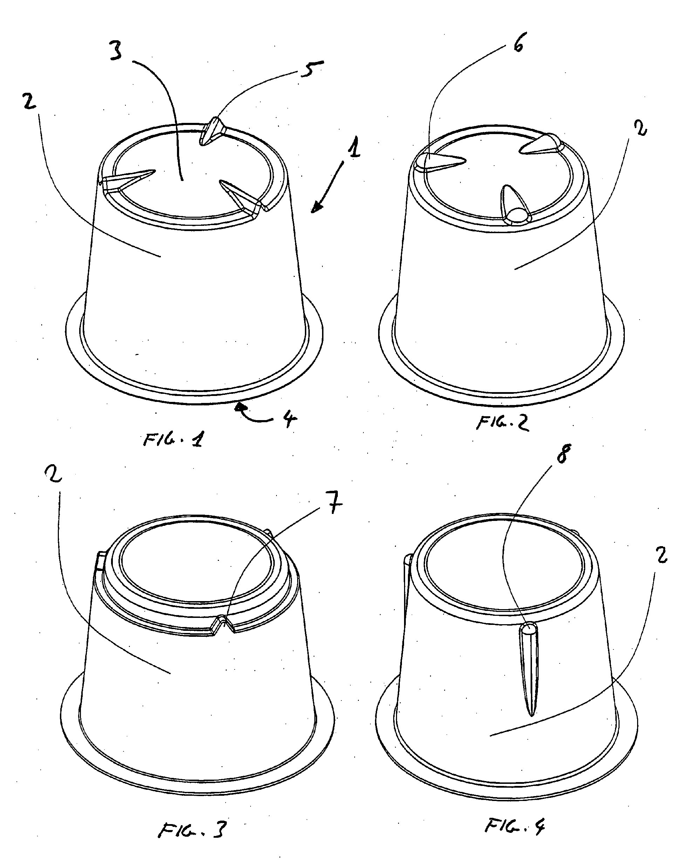

Les figures 1 à 4 illustrent des capsules comprenant un corps creux **1,** une paroi latérale **2,** une face supérieure **3** et une face inférieure **4,** cette dernière comportant une membrane d'extraction (non illustrée).

Comme on peut le voir sur les figures 1 et 2, la face supérieure **3** comporte une série de reliefs **5, 6.**

La capsule illustrée sur la figure 3 comporte une zone périphérique de forme annulaire qui est disposée à un niveau inférieur par rapport à la surface restante de la face supérieure **3.** Dans cette capsule, les reliefs **7** sont disposés sur la périphérie de la face supérieure **3.**

La figure 4 montre une capsule dans laquelle les reliefs **8** sont disposés sur la paroi latérale **2.**

Selon une variante non-illustrée de l'invention, des reliefs sont disposés à la fois sur la face supérieure **3** et sur la paroi latérale **2.**

Chaque relief **5-8** possède au moins une zone de forte courbure, ceci afin de créer une zone de forte pression lorsque l'on applique un élément de perforation sur cette zone.

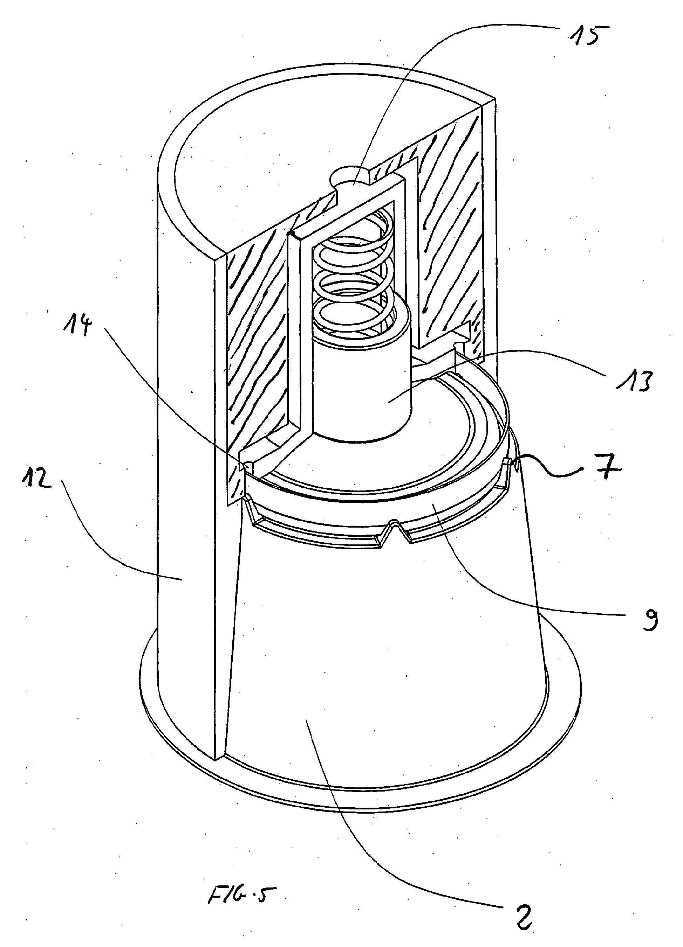

La figure 5 illustre schématiquement un dispositif comprenant un élément de perforation en forme de lame annulaire **9.** La lame **9** est montée en translation selon une direction verticale de manière à perforer les reliefs **7** lorsqu'elle est abaissée.

Dans ce dispositif, la capsule est maintenue en place au moyen d'un bloc de retenue **13** et d'un ressort.

La figure 5 illustre également le chemin suivi par l'eau préalablement à son entrée dans la capsule via les reliefs **7.** L'eau pénètre initialement au travers d'un orifice d'entrée **15,** se loge d'abord dans un espace puis traverse une série d'orifices **14** disposés en-dessus de la lame **9.**

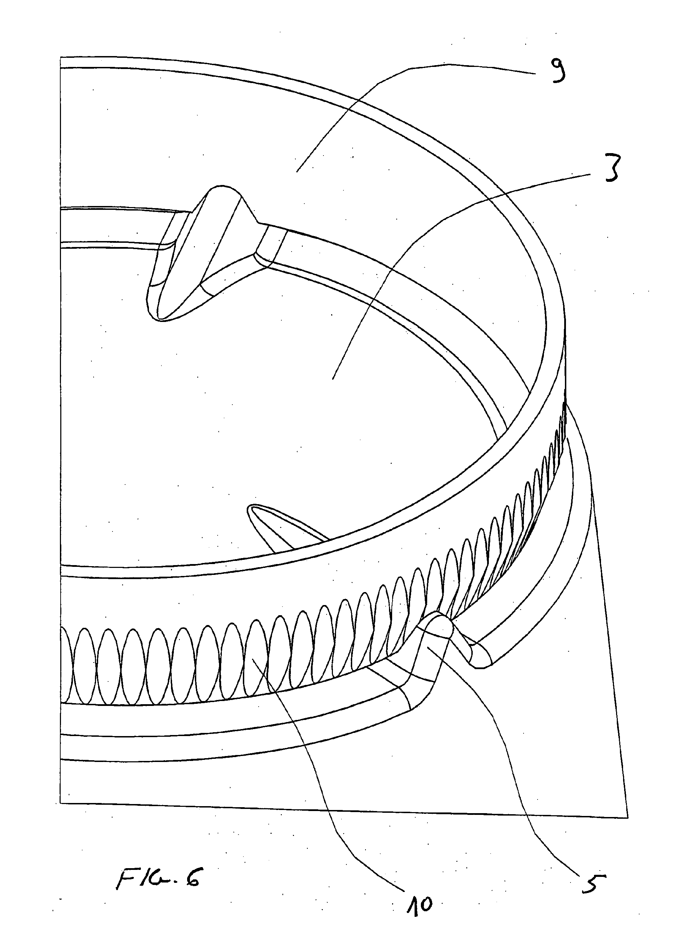

La figure 6 est une vue agrandie de la lame **9** sur laquelle sont disposés des reliefs **10** dont le but vise notamment à assurer un meilleur écoulement de l'eau au travers des perforations réalisées dans les reliefs.

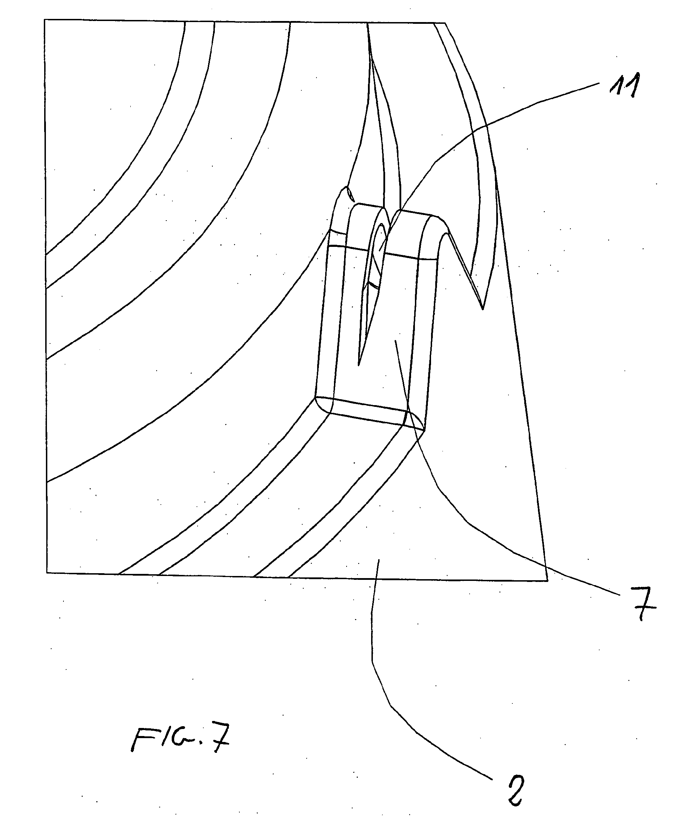

La figure 7 montre une perforation **11** réalisée dans un relief **7** après actionnement de la lame **9.**

La présence de plusieurs reliefs **5-8** en différents endroits de la capsule, et par conséquent de plusieurs lieux de perforation, a pour avantage d'améliorer considérablement le mélange eau-café à l'intérieur de la capsule.

L'invention ne se limite pas aux exemples illustrés.

N'importe quelle forme de relief peut être envisagée. Idem pour la distribution et le nombre des reliefs.

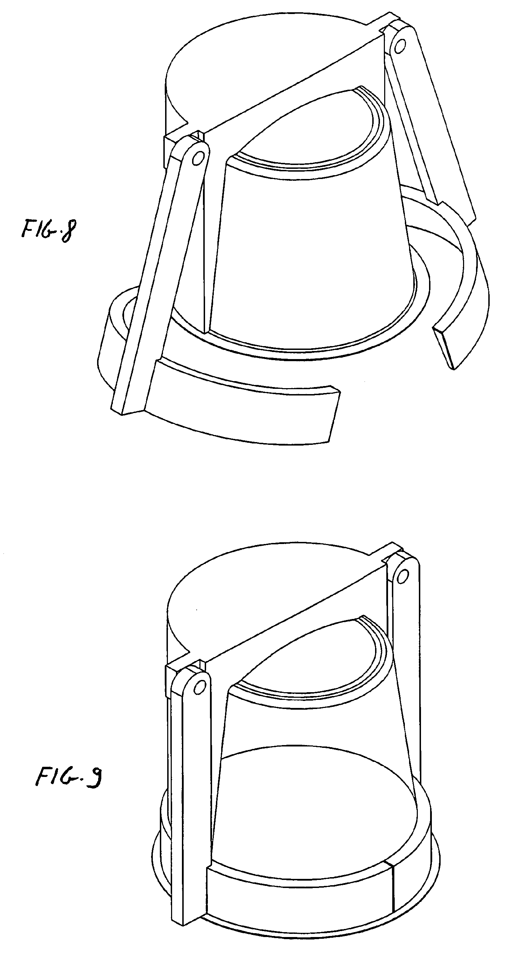

Les figures 8 et 9 présentent schématiquement un premier mode de réalisation rallongement de cage à capsule.

Le rallongement illustré ici est constitué de deux demi cercles pivotants qui sont initialement éloignés lorsque l'on introduit la capsule puis mis en contact lorsque la capsule est logée dans la cage.

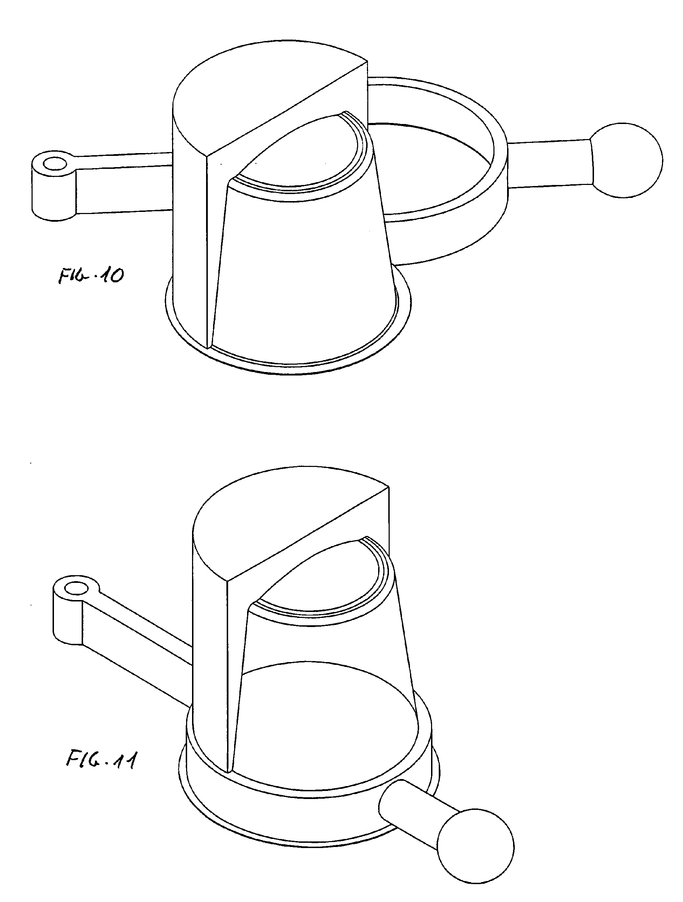

Les figures 10 et 11 illustrent une deuxième variante de rallongement de cage à capsule dans laquelle le rallongement est constitué d'un anneau fermé qui pivote autour d'un axe vertical. L'anneau est doté d'un poussoir.

L'invention concerne également une capsule constituée d'un matériau biodégradable.

Avantageusement, le matériau biodégradable peut être d'origine végétale.

Selon une variante, le matériau comprend les composants suivants :
Amidon (> 70 %), fibres, protéines, lipides, glycérine d'origine végétale, résines biodégradables.

Selon une autre variante, le matériau comprend les composants suivants :
Amidon (> 70 %), fibres, protéines, lipides, résine biodégradable, colorant minéral.

## Revendications

1. Capsule pour la préparation d'une boisson, par exemple du café, comprenant un élément creux (1) destiné à contenir une dose, p.ex. de café moulu, ledit élément creux (1) comprenant une paroi latérale (2), une face supérieure (3) et une face inférieure (4) comportant une membrane d'extraction, la capsule comprenant en outre plusieurs reliefs distincts (5-8) disposés sur une zone annulaire de ladite paroi latérale (2) et/ou de ladite face supérieure (3); capsule **caractérisée par le fait que** chaque relief (5-8) comprend au moins une zone de perforation destinée à être perforée par une lame circulaire.

2. Capsule selon la revendication 1 dans laquelle les reliefs sont formés par gaufrage, étampage, thermoformage ou tout autre procédé similaire.

3. Capsule selon la revendication 1 ou 2 comprenant des reliefs (5-7) sur sa face supérieure (3).

4. Capsule selon la revendication 3 dans laquelle la périphérie de la face supérieure (3) est abaissée, les reliefs (7) étant disposés sur la périphérie.

5. Capsule selon l'une quelconque des revendications précédentes comprenant des reliefs (8) sur sa paroi latérale (2).

6. Capsule selon l'une quelconque des revendications précédentes dans laquelle l'épaisseur de la paroi au niveau des reliefs (5-8) est sensiblement identique à l'épaisseur des parois (2,3) de la capsule.

7. Dispositif pour l'utilisation d'une capsule telle que définie dans l'une des revendications 1 à 5 comprenant un porte-capsule, un logement de capsule (12), une entrée d'eau (15) et un élément de perforation (9), **caractérisé par le fait que** ledit élément de perforation (9) est disposé de manière à perforer exclusivement des reliefs (5-8) disposés sur la paroi latérale (2) et/ou supérieure (3) d'une capsule qui serait disposée sur ledit porte-capsule et dans ledit logement de capsule (12) et que ledit élément de perforation (9) est une lame circulaire.

## Claims

1. Cartridge for preparing a drink, for example coffee, comprising a hollow element (1) designed to contain a dose, e.g. of ground coffee, said hollow element (1) comprising a side wall (2), an upper face (3) and a lower face (4) comprising an extraction membrane, the cartridge also comprising several distinct protrusions (5-8) placed on an annular zone of said side wall (2) and/or of said upper face (3); said cartridge being **characterized in that** each protrusion (5-8) comprises at least one perforation zone intended to be perforated by a circular blade.

2. Cartridge according to Claim 1, wherein the protrusions are formed by embossing, stamping, thermoforming or any other similar method.

3. Cartridge according to Claim 1 or 2, comprising protrusions (5-7) on its upper face (3).

4. Cartridge according to Claim 3, wherein the periphery of the upper face (3) is lowered, the protrusions (7) being placed on the periphery.

5. Cartridge according to any one of the preceding claims, comprising protrusions (8) on its side wall (2).

6. Cartridge according to any one of the preceding claims, wherein the thickness of the wall at the protrusions (5-8) is substantially identical to the thickness of the walls (2, 3) of the cartridge.

7. Device for the use of a cartridge as defined in one of Claims 1 to 5, comprising a cartridge-holder, a cartridge-housing (12), a water inlet (15) and a perforation element (9), **characterized in that** said perforation element (9) is placed so as to perforate only the protrusions (5-8) placed on the side wall (2) and/or upper face (3) of a cartridge that is placed on said cartridge-holder and in said cartridge-housing (12) and **in that** said perforation element (9) is a circular blade.

## Patentansprüche

1. Kapsel für die Zubereitung eines Getränks, zum Beispiel von Kaffee, umfassend ein hohles Element (1), das eine Dosis, zum Beispiel von gemahlenem Kaffee, enthalten soll, wobei das hohle Element (1) eine Seitenwand (2), eine Oberseite (3) und eine Unterseite (4), die eine Extraktionsmembran enthält, umfasst, wobei die Kapsel des Weiteren mehrere verschiedene Strukturierungen (5 - 8) umfasst, die in einer ringförmigen Zone der Seitenwand (2) und/oder der Oberseite (3) angeordnet sind, **dadurch gekennzeichnet, dass** jede Strukturierung (5 - 8) mindestens eine Perforationszone umfasst, die durch ein Kreismesser perforiert werden soll.

2. Kapsel nach Anspruch 1, wobei die Strukturierungen durch Prägen, Stanzen, Thermoformen oder irgendein anderes ähnliches Verfahren ausgebildet werden.

3. Kapsel nach Anspruch 1 oder 2, die Strukturierungen (5 - 7) auf ihrer Oberseite (3) umfasst.

4. Kapsel nach Anspruch 3, wobei der Umfang der Oberseite (3) abgesenkt ist, wobei die Strukturierungen (7) am Umfang angeordnet sind.

5. Kapsel nach einem der vorhergehenden Ansprüche, die Strukturierungen (8) an ihrer Seitenwand (2) umfasst.

6. Kapsel nach einem der vorhergehenden Ansprüche, wobei die Dicke der Wand an den Strukturierungen (5 - 8) im Wesentlichen identisch mit der Dicke der Wände (2, 3) der Kapsel ist.

7. Vorrichtung zur Verwendung einer Kapsel nach einem der Ansprüche 1 bis 5, die einen Kapselhalter, eine Kapselaufnahme (12), einen Wassereinlass (15) und ein Perforationselement (9) umfasst, **dadurch gekennzeichnet, dass** das Perforationselement (9) dazu angeordnet ist, ausschließlich an der Seitenwand (2) und/oder Oberseite (3) einer auf dem Kapselhalter oder in der Kapselaufnahme (12) angeordneten Kapsel angeordnete Strukturierungen (5 - 8) zu perforieren, und dass das Perforationselement (9) ein Kreismesser ist.
